# EUROPEAN PATENT APPLICATION

(11) **EP 3 279 531 A1**
(43) Date of publication of application: **07.02.2018**
(21) Application number: 16771438.5
(22) Date of filing: 29.03.2016
(51) Int. Cl.: F16K 11/00, F15B 13/04

(54) **DIRECT-OPERATED 3/2-WAY HYDRAULIC DIRECTIONAL CONTROL VALVE WITH FAST-SWITCHING BETWEEN THE TWO OPERATING POSITIONS**

(30) Priority: 02.04.2015 EG 2015040504
(71) Applicant: Science & Technology Development Fund, Cairo (EG)
(72) Inventor: EL GAMIL, Mohamed Ahmed, Giza (EG)
(74) Representative: Oliveira Lourenço, Nuno Miguel
(86) International application number: PCT/EG2016/000010
(87) International publication number: WO 2016/155751

(57) **Abstract**

The new valve incorporates a poppet or spool that covers one of two ports at one position, and then switches to cover another port at a second position. In each of the two positions, it separates the covered port from a third port, and connects this third port with the uncovered port, and it reverses the connections at the second position. To ensure high speed of response, the poppet or spool has lowest possible mass and consequently inertia, it switches between the two positions in short stroke by the action of an actuator, and returns by the action of the liquid (or the gas in other applications) high pressure that could provide high displacing force, or by a spring, or by both. The high pressure is applied to two nearly equal areas at the two sides of the poppet or spool, and thus two merits are gained: the actuator force should overcome the force of the pressure applied only on a small differential area instead of a large area, and the poppet or spool thicknesses can be reduced to reduce the mass and consequently the inertia. As special case, two ports of the valve can be used instead of three, and the third one can be connected to a high pressure source to be used as pilot pressure for fast returning of the poppet. It could continuously connect or separate between any two ports at both working positions with any pattern of connections. The valve can be used to control pressurized gases in other industrial control applications in the same way it is used in hydraulic control systems, but with materials suitable for the application.

## Description

### Technical Field

Valves for controlling liquid flow

### Background Art

Hydraulic directional control valves are the valves that direct the flow between their various ports. They can be defined by their number of ports and number of operating positions; namely a 3/2 valve means a valve with three ports and two operating positions. Hydraulic directional control valves direct the flow according to the operating positions they assume. For example, if the valve has four ports, one of them is connected to the pressure supply, the second is connected to the tank, and the other two are connected to the two sides of a hydraulic actuator, this valve can possess any number of operating positions. Assuming a valve of three operating positions; where all its ports are closed at the first position when there is no input signal, then the actuator will be stopped. If an input signal is fed to shift the valve to one of the other positions, in which one actuator side is connected to the pressure supply line while the other is connected to the tank, the actuator would move in one direction, and if the input signal is fed to shift the directional control valve to the third position, then the connections between the valve ports are reversed and consequently the actuator will move in the other direction. The shifting time from the valve central position to any of the other operating positions may be up to one tenth of a second according to its drive type if it is directly operated, or bit more if it is a pilot operated where a pilot valve drives the main stage(s). The prevailing type of these valves is the spool valve, where the lands of the spool connect or separate between various ports according to the required functionality.

Hydraulic servo valves are different from hydraulic directional control valves in that their spools can assume and maintain infinite number of positions before reaching the full opening, and thus they can thus provide partial connections. By this way, precise control of flow rate and/or pressure beside the control of direction can be achieved. Besides, the spool can reach full stroke in one hundredth of a second instead of one tenth. This precision and high speed of response require precise manufacturing, with a production cost of several times as high as the production cost of hydraulic directional control valves of the same size.

There is a third type of hydraulic directional control valves which has infinite number of operating positions but with less precision and speed of response when compared with servo valves. tolerating requirements. These valves are called hydraulic proportional directional control valves. They are of less production and operation costs in comparison with servo valves, since the requirements of their manufacturing accuracy are less than in servo valves. In a hydraulic system a proportional directional control valve can replace many conventional hydraulic valves.

### Disclosure of Invention

### - Technical Problem

The speed of response of the valving elements of servo, proportional and fast switching valves should be so high in order to realize fast and precise control of hydraulic actuators' motion. These speeds are always limited by the capabilities of the actuators of the valves, which are usually electric devices that receive the valves' input signals and transform them to mechanical displacements of the valving elements. The actuators' capabilities, which are forces or torques, should overcome forces that resist the valving elements' motion such as friction, pressure and flow forces. Besides, what remains from an actuator force or torque is utilized in overcoming the valving element inertia to move it. This valving element is the ports' connection controller, and its speed determines the speed of response of the valve.

The flow forces represent considerable percentage of the forces that resist the valving element displacement. If the controlled flow rate increases, the resisting flow forces to be overcome also increase, and the electric actuator may not be able to displace the valving element. In this case, a two stage valve should be used, where a small pilot stage receives the input signal and drives a main stage that controls the actuator. This reduces the valve speed of response. Further increase in flow rates necessitates increasing the number of stages of the valve, which adversely affect the valve speed of response. Increasing the flow rate capacity of a valve and its speed of response would reduce the number of the required stages and improves the valve performance when used either as a main or a pilot valve.

### - Solution to Problem

The presented 3/2 valve incorporates a poppet or a spool that closes one port at one of its two positions and closes another port when switched to the other position. The third port is connected with the uncovered port at each position, and the connection is reversed when the position is switched. To ensure fast response, the poppet or spool should have the lowest mass and inertia, and should move between the two positions in short stroke distance. The movement towards one position is driven by an actuator, while the return is driven by a pressure force or a spring force or by both of these two forces. A short stroke distance enables using actuators of high force and short stroke such as, but not limited to, piezoelectric actuators of considerably higher speeds of response. In this invention, the high supply pressure is applied on the two sides of the poppet or spool, with the areas of the two sides are nearly, but not, equal, which renders two merits. The first is that the actuator force or torque required for overcoming the high supply pressure force resisting the motion is small, since the resultant pressure force is acting on the small area difference only. The second merit is that the poppet or spool thicknesses, and consequently the inertia, can be considerably reduced, since it is not subjected to considerable difference in the pressure forces acting on its two sides, and its thickness can be thus reduced.

As a special case of the three port valve, two ports only can be used to have a 2/2 valve configuration, while the third one is connected to a high pressure line to be used as a further pilot port if the available pressure of the two-working pressure or springs cannot render the required fast return stroke.

The presented valve can be used as a pneumatic control valve or as a control valve in various industrial applications, as it is used as a hydraulic control valve, when suitable materials are used in its design.

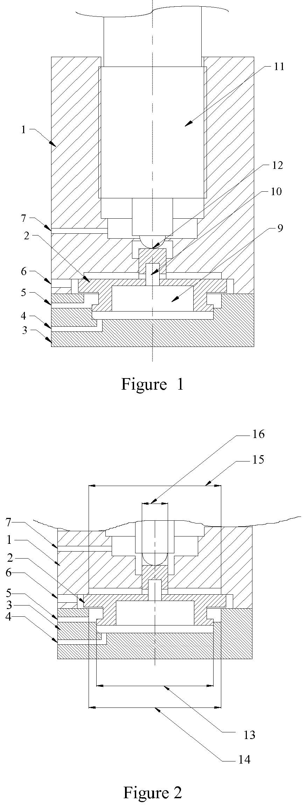

Figure 1 shows a longitudinal cross section in an example for the designs of the valve that presents the valve and its main parts. This design consists of a housing (1), a poppet (2) which operates between two seats; one on the housing (1) and the other on the part (3). The poppet (2) could be hollow (9) as shown in the figure in order to decrease its mass and consequently its inertia. Being subjected to the same pressure on both sides due to the hole (10) helps in poppet mass reduction and consequently thinning of some its parts. When the poppet rests on its seat in the housing (or on an intermediate seat fixed to the housing), port (6) connects with port (5), and when the poppet rests on the part (3) (or on an intermediate seat fixed to this part) then port (6) is connected to port (4) through the hole (10). Actuator (11) pushes the poppet (2) at point (12).

Since the liquid shouldn't leak to the actuator, port (7) can be introduced and used to drain any leakage to the tank under low pressure, and adequate low pressure sealing can be introduced.

Figure 2 shows a zoom in of the poppet zone and its vicinity. The pressure of the liquid connected to port (4) acts on the area (13) and generates force acting towards the actuator, while the same pressure applies to the area difference (15 minus 16) and generates force acting in the same direction of the actuator force. If area (13) is larger than the area difference (15 minus 16), the resultant force acts towards the actuator. The pressure of the liquid connected to port (5) applies force to the area difference (13 minus 14), which acts towards the actuator. Port (5) could be connected to the tank, then the resulting force approaches zero. Port (4) is connected with the supply high pressure, and the poppet consequently always rests on the seat in housing (1), except when energizing the actuator, which pushes the poppet to rest on the seat in part (3).

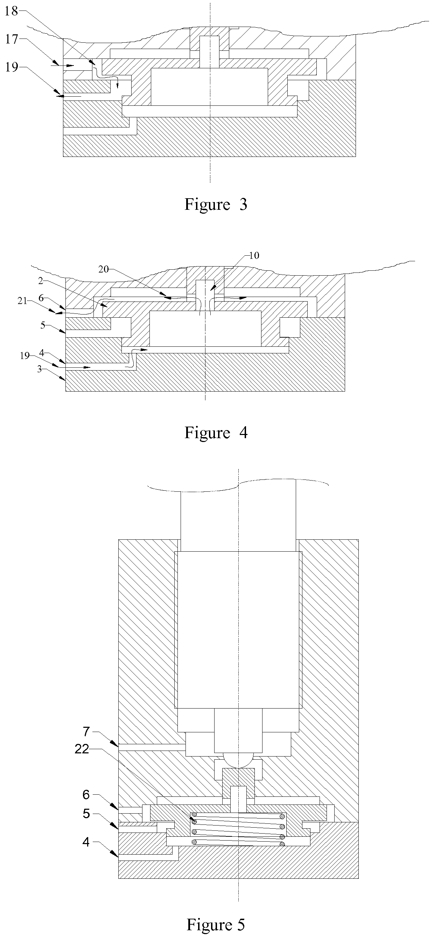

Figure 3 shows the poppet when it is resting on its housing (1) seat under the effect of the supply high pressure connected through port (4). At this position, the liquid comes from port (6) as represented by the arrow (17), passes through the gap between the poppet (2) and the part (3) as shown the arrow (18) and then drained to tank through the port (5) as represented by arrow (19).

Figure 4 shows the poppet when it rests on its part (3) seat under the effect of energizing the actuator. At this position, the liquid enters from the port (4) as represented by the arrow (19), then passes through the hole (10) as represented by the arrow (20) and then exits from the gap between the poppet and the housing (1) to the port (6) as represented by the arrow (21) towards the hydraulic load.

If the port (4) is not connected to a high pressure line, or is the pressure not high enough to displace the poppet (2) with reasonable fast speed, then a spring could be used to achieve this target. An example for this case is shown in figure 5, where a helical spring (22) is used.

The valve can operate with only two ports (4) and (6) by plugging the port (5).

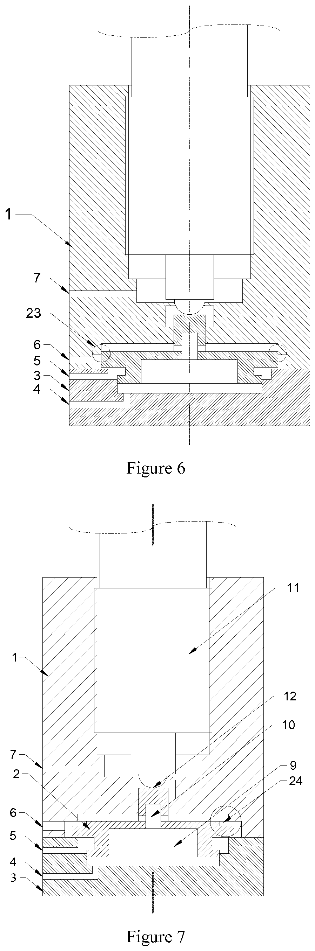

The valve can have only two operating ports as shown in figure 6. The positive overlap between the poppet and the housing (1) as denoted by (23) prevents any connection between the ports (4) and (6) at any of the two working positions. In this case the port (4) can be connected with a high pressure line to displace the poppet, or to the tank to facilitate the poppet movement if it is displaced by means of a spring or any other means. It is also possible to plug this port or completely remove it in order not to resists the poppet motion, if the areas of the two sides of the poppet a properly chosen.

Figure 7 shows how to machine openings on one of the poppet sides as denoted by (24) in order to make the valve three ports interconnected in one of the two valve working positions; in this case when the actuator is not energized.

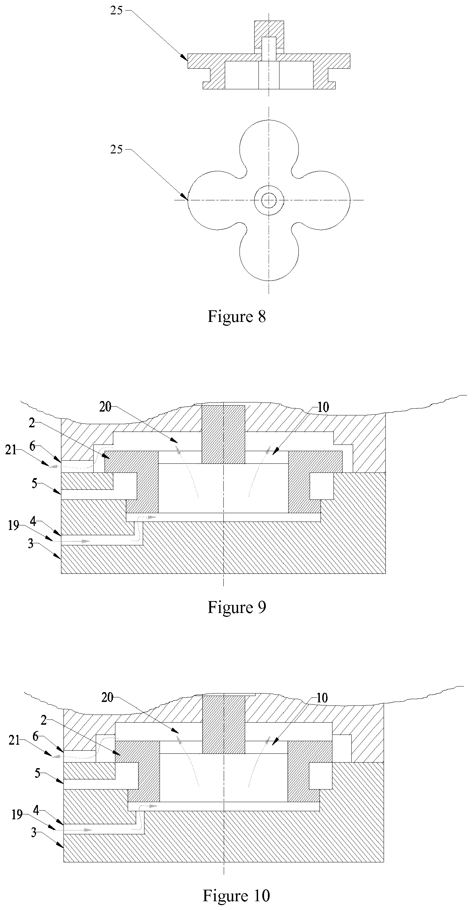

It is to be noted that the control orifices through which the liquid passes are formed on the edges of the poppet, and the length of these edges determines the areas of these orifices and consequently the maximum flow rate of the valve. Because the circular shape possesses the shortest circumference, shaping the poppet in a different shape elongates the circumference. Figure 8 shows a poppet of corrugated edge (25) as an example for increasing the control orifice area without increasing its outer dimensions.

Figure 9 shows how to use more than one through hole (10) to connect the two sides of the poppet. This configuration is useful when the flow passes through the poppet because the reaction due to the flow direction diversion will not be supported by the moving part, and thus the poppet will be subjected to lower force. These through holes enable passing the liquid through it and applying the same pressure on both the poppet sides. Applying the same pressure at both the poppet sides reduces the forces by trying to balance them, which is the most important criterion, but passing the flow is not of same importance as the flow can pass through different paths away from the poppet.

As an alternative to the poppet, a spool (2) is used as shown in figure 10. The spool is acting like a poppet but its diameter is same as its seat, with a slight clearance. The spool in this case cannot firmly close the ports as the poppet does, but it operates without hitting the seat when mating at every closure occasion.

### Brief Description of Drawings

Figure 1 is a longitudinal cross section showing the valve main parts
Figure 2 is a zoom in of the poppet zone and its vicinity in the longitudinal cross section showing the different areas of the poppet two sides and the applied pressures to them
Figure 3 shows the ports connections and separation at one of the working positions, when the actuator is not energized
Figure 4 shows the ports connections and separation at the other working position, when the actuator is energized
Figure 5 shows how to use a spring to displace or assist displacing the poppet
Figure 6 shows example for the various possibilities of the valve ports' interconnections
Figure 7 shows how can all ports be connected at one of the two working positions
Figure 8 shows how to increase the control orifice area without increasing the poppet outer dimensions
Figure 9 shows how to use many holes between the poppet two sides instead of a central one
Figure 10 shows how to use a spool instead of the poppet

### Industrial Applicability

These valves with fast response in switching between working positions are to be used in hydraulic control systems, especially those requiring high accuracy and high speed of response. These valves are suitable in digital hydraulics applications or analogue hydraulic control systems with pulse width modulation (PWM) techniques. They are also suitable to be used as a pilot stage in pilot operated directional, proportional and servo valves.

Applications are not restricted to hydraulic control systems only, but also, they are applicable as valves controlling various fluids in various industrial applications.

## Claims

1. A fast switching directional control valve including a valving element (poppet or spool) operating between two working positions, the valving element has lowest possible inertia because of it is hollow, where the cavities inside it connect between its both sides, its functional stroke is as short as possible and it connects and separates between three ports in general and only two ports as a special case.

2. A fast switching directional control valve with a valving element (poppet or spool) as in claim 1, where the valving element, at one of its two working positions, connects two of the valve ports and separates a third port.

3. A fast switching directional control valve with a valving element (poppet or spool) as in claim 1, where the valving element, at its second working position, connects one of the valve connected ports in claim 1 to the third port, and separates the other port.

4. A fast switching directional control valve with a valving element (poppet or spool) as in claim 1, where the valving element does not separate any port at one of its two working positions, i.e. there is a working position where the three ports are all connected

5. A fast switching directional control valve with a valving element (poppet or spool) as in claim 1, where the valving element doesn't connect a port at any of the two working positions in claims 2 and 3, i.e. there is a port that doesn't connect to any of the two other ports at any working position

6. The port separated from the other two ports in claim 5 could be completely removed if poppet side areas are properly designed to facilitate its movement

7. A fast switching directional control valve with a valving element (poppet or spool) as in claims from 1 to 4, where the valving element two sides areas and its inside and outside openings designed so as to bring the forces due to pressures close to be balanced, and the resultant pressure force drives the poppet to one of the two working positions.

8. A fast switching directional control valve with a valving element (poppet or spool) as in claims from 1 to 7, where the pressure on the valving element of distribution close to be balanced doesn't result in valving element distortion when resting on one of its seats (or aligned with it) under the pressure effect

9. A fast switching directional control valve with a valving element (poppet or spool) as in claims from 1 to 8, where a through hole inside the valving element connects its two sides

10. A directional control valve with a valving element (poppet or spool) as in claims from 1 to 9, where cavities can be shaped inside the valving element in order to reduce its mass

11. A fast switching directional control valve with a valving element (poppet or spool) as in claims from 1 to 10, where a spring could be used to move or assist in moving the valving element

12. A d fast switching irectional control valve with a valving element (poppet or spool) as in claims from 1 to 11, where ports other than the operating ports can be formed for different purposes such as draining the internal leakages

13. A fast switching directional control valve with a valving element (poppet or spool) as in claims from 1 to 12, where flow control orifice area can be increased by designing the valving element in such a way that increases its circumference while keeping its outer dimensions unchanged

14. A fast switching directional control valve with a valving element (poppet or spool) as in claims from 1 to 13, where the reaction resulting from the flow passing through the valving element inside holes is supported by the fixed parts

15. A directional control valve with a valving element (poppet or spool) as in claims from 1 to 14, where any performance improving elements such as seals, measuring or monitoring tools can be added without considering them a modification in its idea
